(19) Europäisches Patentamt
European Patent Office
Office européen des brevets

(11) **EP 1 701 108 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(51) Int Cl.:
***F24F 13/14*** *(2006.01)*

(21) Anmeldenummer: **06000982.6**

(22) Anmeldetag: **18.01.2006**

(54) **Regelklappenvorrichtung**

Control damper device

Dispositif de volet de régulation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.03.2005 DE 102005011791**

(43) Veröffentlichungstag der Anmeldung:
**13.09.2006 Patentblatt 2006/37**

(73) Patentinhaber: **Eidmann, Jürgen**
**61348 Bad Homburg (DE)**

(72) Erfinder: **Eidmann, Jürgen**
**61348 Bad Homburg (DE)**

(74) Vertreter: **von dem Borne, Andreas**
**Andrejewski - Honke**
**Patent- und Rechtsanwälte**
**An der Reichsbank 8**
**45127 Essen (DE)**

(56) Entgegenhaltungen:
**DE-A1- 1 454 651     GB-A- 2 240 621**
**US-A- 5 249 596**

## Beschreibung

Die Erfindung betrifft eine Regelklappenvorrichtung, insbesondere für eine Rauchschutz-Differenzdruckanlage, mit einem Gehäuse oder dergleichen Halterung, zumindest einer um eine Drehachse schwenkbar in dem Gehäuse gelagerten Regelklappe und zumindest einer einerseits an das Gehäuse und andererseits über ein Anschlussteil an die Regelklappe angeschlossenen (vorgespannte) Schließfeder, wobei die Schließfeder mit ihrer Federkraft ein die Regelklappe in Schließstellung haltendes oder in Schließstellung überführendes Schließmoment erzeugt und wobei die Regelklappe unter Bildung einer Durchströmöffnung um einen vorgegebenen Öffnungswinkel schwenkt, sobald ein einseitig auf die Regelklappe wirkender Öffnungsdruck ein das Schließmoment übersteigendes Öffnungsmoment erzeugt.

Rauchschutz-Differenzdruckanlagen dienen insbesondere der Rauchfreihaltung von Flucht- und Rettungswegen in beispielsweise Fluren und Treppenhäusern. Dazu werden diese von Rauch freizuhaltenden und folglich zu schützenden Räume mittels Ventilatoren mit einem Luftüberschuss beaufschlagt, so dass sich in den von Rauch freizuhaltenden bzw. zu schützenden Räumen ein vorgegebener Überdruck gegenüber dem Druck in zum Beispiel benachbarten Räumen oder Außenbereichen, zum Beispiel Atmosphärendruck, ergibt. Aus Sicherheitsgründen darf der für die Rauchfreiheit erforderliche Überdruck einen zulässigen Maximalwert (zum Beispiel 50 Pa) nicht überschreiten. Aus diesem Grunde sind in Rauchschutz-Differenzdruckanlagen mit Ventilatoren die eingangs beschriebenen Regelklappenvorrichtungen integriert, zum Beispiel in Wände oder Decken eingebaut. Derartige Regelklappenvorrichtungen dienen der selbsttätigen Luftabfuhr überschüssiger Luft, damit der zulässige Maximaldruck gegenüber Atmosphärendruck nicht überschritten wird. Die Regelklappen öffnen bei Erreichen des zulässigen Überdruckes unter Wirkung der skalaren Druckkräfte selbsttätig und die überschüssige Luft wird mit einem Durchströmdruckverlust, der gleich dem geforderten zulässigen Überdruck des Druckraums entspricht, an die Atmosphäre übergeben, so dass die Regelklappe dann selbsttätig wieder schließt. Dabei muss auf die geeignete Wahl bzw. Bemaßung der Abströmflächen geachtet werden. Werden in einem solchen Druckraum beispielsweise Türen oder Fenster geöffnet, so schließt die Regelklappe im Moment des Druckabfalls durch den Wegfall öffnender Druckkräfte selbsttätig durch das mechanische Rückholsystem und unterstützt den erneuten Druckaufbau der Ventilatoren im Druckraum bis der zulässige Überdruck erreicht ist, um dann wieder zu öffnen oder sie bleiben so lange geschlossen, bis der Druckabfall infolge der Durchströmung der Öffnungen von Türen oder Fenstern den zulässigen Überdruck nicht mehr übersteigt.

Bei einer bekannten Regelklappenvorrichtung der eingangs beschriebenen Art sind in einem gemeinsamen Gehäuse sowohl der Zuluftventilator als auch die über Schließfedern selbsttätig wirkenden Regelklappen angeordnet. Diese Klappen öffnen selbsttätig, wenn der Überdruck den angestrebten Wert überschreitet und schaffen einen Bypass zur Saugseite des Ventilators. Als Anschlussteil zwischen Zugfeder einerseits und Regelklappe andererseits sind Führungskulissen vorgesehen, welche starr an die Regelklappe angeschlossen sind (vgl. DE 102 51 149 A1). Nachteilig bei der insoweit bekannten Konstruktion ist, dass der effektive Hebelarm bei größeren Öffnungswinkeln nahezu null wird, so dass eine einwandfreie Klappenrückführung bei ebenfalls hohen Reibungsanteilen nicht immer gewährleistet ist oder jedenfalls hohe Federkräfte erfordert. Dabei muss gegebenenfalls mit sehr starken Federlängungen gearbeitet werden. In der Regel müssen zusätzliche Rückholfedern eingesetzt werden.

Im Übrigen kennt man aus der DE 14 54 651 A1 eine Gastrom-Steuerjalousie mit einer Mehrzahl von verschwenkbaren Steuerflügeln, welche unter dem Druck des durchströmenden Gases in eine Öffnungsstellung schwenken und welche in eine Schließstellung zurückschwenken, wenn der Gasdruck unter einen vorbestimmten Minimaldruck sinkt. Die einzelnen Klappen sind über jeweils einen Hebel gelenkig an eine Steuerstange angeschlossen, auf welche eine Schließfeder arbeitet.

Der Erfindung liegt die Aufgabe zu Grunde, eine Regelklappenvorrichtung der eingangs beschriebenen Art zu schaffen, welche auf einfache Weise eine einwandfreie Funktion gewährleistet und bei sämtlichen Klappenöffnungswinkeln eine sichere Klappenrückführung ermöglicht. Außerdem sollen schnelle Öffnungs- und insbesondere Schließzeiten gewährleistet sein.

Diese Aufgabe wird erfindungsgemäß durch eine Regelklappenvorrichtung mit den Merkmalen des Patentanspruchs 1 gelöst. Bevorzugte Ausführungsformen sind in den abhängigen Patentansprüchen beschrieben.

Das Anschlussteil ist als gelenkig an die Regelklappe angeschlossener Anschlusshebel ausgebildet ist. Das Anschlussteil ist folglich als Anschlusshebel bzw. Anschlussgelenk gegenüber der Regelklappe schwenkbar mit der Regelklappe verbunden. Vorzugsweise ist der Anschlusshebel gelenkig an einen drehfest mit der Regelklappe verbundenen Verbindungsarm oder Verbindungsansatz angeschlossen, wobei dieser Verbindungsarm unter einem vorgegebenen Winkel starr bzw. drehfest an der Regelklappe befestigt ist. Der Anschlusshebel selbst weist dabei eine Führungskulisse mit einer vorzugsweise kurvenförmigen Langlochführung auf, in welcher ein an die Schließfeder endseitig angeschlossenes Führungselement, zum Beispiel ein Führungszapfen, gelenkig verschiebbar geführt ist. Dieser Führungszapfen kann insbesondere wälzgelagert in der Langlochführung geführt sein. Insofern ist der Anschlusshebel vorzugsweise als gelenkig an die Schließklappe bzw. den Verbindungsarm angeschlossener Kurvenzug ausgebildet.

Die Schließfeder ist über den Anschlusshebel vorzugsweise derart an die Schließklappe angeschlossen, dass der Hebelarm bzw. die Länge des auf die Klappe wirkenden Hebelarms in allen Klappenstellungen größer als Null ist, so dass die Federkraft in allen Klappenstellungen ein Schließmoment größer Null erzeugt. Hebelarm bzw. Länge des Hebelarms meint im Rahmen der Erfindung den senkrechten Abstand der Federkraftwirkungslinie bzw. des Federkraftvektors von dem Drehpunkt bzw. der Drehachse der Regelklappe.

Die Erfindung geht dabei von der Erkenntnis aus, dass durch die gelenkige Anbindung eines separaten Anschlusshebels einerseits an die Schließfeder und andererseits an die Regelklappe eine einwandfreie und schnelle Rückführung der Regelklappe in die Schließstellung bei sämtlichen Regelklappenöffnungswinkeln gewährleistet ist. Denn die Anbindung der Schließfeder an die Schließklappe über das beidseitig gelenkig angeordnete Führungsgelenk bzw. Anschlusshebel als gleichsam frei bewegliches Zwischenbauteil ermöglicht es, dass bei sämtlichen Klappenöffnungswinkeln stets ein definierter Rest-Hebelarm und folglich eine Hebelarmlänge größer Null beibehalten wird, so dass stets ein einwandfreies rückführendes Schließmoment erzeugt wird. Denn das Schließmoment ergibt sich aus dem Produkt aus einerseits Federkraft und andererseits wirksamen Hebelarm.

In besonders vorteilhafter Weiterbildung der Erfindung ist der zum Beispiel als Kurvenzug ausgebildete Anschlusshebel in Schließstellung von der Drehachse bzw. Drehwelle (zunächst) beabstandet, während es im Zuge des Öffnens ab einem bestimmten Grenzwinkel gegen die Drehachse bzw. die Drehwelle der Regelklappe anschlägt und sie folglich berührt und dann im Zuge des weiteren Öffnens weiter anliegt und folglich mit der Drehklappe dreht. Auf diese Weise lässt es sich einrichten, dass das von der Schließfeder erzeugte und vom Öffnungswinkel abhängige Schließmoment von der Schließstellung bis in die vollständige Offenstellung kontinuierlich abnimmt oder bereichsweise konstant ist. Jedenfalls sinkt das Schließmoment nicht auf Null und es steigt auch nicht wieder an. Unter Berücksichtigung der Tatsache, dass die Anlenkung der Feder einerseits über eine Langlochführung erfolgt und andererseits der Anschlusshebel im Zuge des Öffnens ab einem bestimmten Grenzwinkel gegen die Drehachse anliegt, lässt es sich im Rahmen der Erfindung einrichten, dass das Schließmoment in Abhängigkeit vom Öffnungswinkel von der Schließstellung im Zuge des Öffnens bis zu einem Grenzwinkel mit zunächst hoher Steigung bzw. sehr starkem Abfall abnimmt und anschließend mit geringer Steigung abnimmt oder im Wesentlichen konstant ist. Durch diesen winkelabhängigen Verlauf des Schließmomentes wird eine besonders sichere Klappenrückführung bei allen Öffnungswinkeln bei gleichzeitig hohen Öffnungs- und Schließgeschwindigkeiten gewährleistet.

Im Rahmen der Erfindung kann mit über den gesamten Öffnungsbereich im Wesentlichen konstanter Federkraft der vorgespannten Feder und mit verhältnismäßig geringen Federlängungen gearbeitet werden und dennoch wird bei definiertem Resthebelarm stets ein einwandfreies Rückholmoment erzeugt, welches unter Vermeidung von Hystereseerscheinungen stets ein sicheres Öffnen und Schließen der Regelklappe gewährleistet. Das von der vorgespannten Schließfeder erzeugte Schließmoment besitzt dabei stets einen Schnittpunkt in der Offenstellung mit den abnehmenden öffnenden Luftkraftmomenten, so dass bei weiter abnehmenden Luftkräften eine sichere Rückführung in die geschlossene Stellung gewährleistet ist. Zusätzliche Reibungseffekte durch zunehmende Federkräfte werden vermieden.

Nach einem weiteren Vorschlag der Erfindung ist der Anschlusshebel in der Seitenansicht L-förmig oder auch C-förmig ausgebildet. Ferner ist es zweckmäßig, wenn der Anschlusshebel im Querschnitt U-förmig und folglich im Querschnitt als U-Profil ausgebildet ist. Grundsätzlich werden aber auch Ausführungsformen umfasst, bei welchem der Anschlusshebel als Flachprofil oder L-Profil ausgebildet ist.

Es ist zweckmäßig, wenn in dem einen L-Schenkel (oder C-Schenkel) zumindest eine Gelenkausnehmung zur gelenkigen Anlenkung der Regelklappe bzw. des Verbindungsarms und in dem anderen L-Schenkel (bzw. C-Schenkel) eine weitere Gelenkausnehmung, zum Beispiel die Langlochführung für die gelenkige und verschiebbare Anlenkung der Schließfeder angeordnet ist. Unter Berücksichtigung der Tatsache, dass das Führungsgelenk bzw. der Anschlusshebel vorzugsweise im Querschnitt U-förmig ausgebildet ist, sind in jedem der U-Schenkel fluchtende Gelenkausnehmungen und fluchtende Langlöcher vorgesehen.

Zwischen Langlochführung einerseits und Gelenkausnehmung andererseits ist vorzugsweise eine Führungsfläche angeordnet, an der der Anschlusshebel im Zuge des Öffnens an der Drehachse bzw. Drehwelle geführt ist. Diese Führungsfläche ist dabei vorzugsweise zumindest bereichsweise bogenförmig als gleichsam Ausnehmung ausgebildet. Diese Ausführungsform gewährleistet, dass der Gelenkhebel bzw. der Anschlusshebel gleichsam um die Drehachse konzentriert ist, so dass wegen geringer Radien lediglich geringe Massenträgheitsmomente erzeugt werden, was wiederum minimale Schließzeiten ermöglicht. Im Rahmen der Erfindung werden dabei Schließzeiten der Regelklappen von 0,1 sek. oder weniger erreicht.

Der Anschlusshebel bzw. Kurvenzug ist vorzugsweise als einstückig gefertigtes Formteil ausgebildet. Dabei kann der Anschlusshebel aus Metall, zum Beispiel aus Stahl gefertigt sein. Es werden aber auch Ausführungsformen aus anderen Materialien, zum Beispiel aus Kunststoff, umfasst.

Gegenstand der Erfindung ist auch eine Regelklappenvorrichtung in der Ausführungsform als Mehrklappenvorrichtung mit einer Mehrzahl nebeneinander und/oder übereinander bzw. untereinander in einem gemeinsamen Gehäuse angeordneter Regelklappen, wobei die Regelklappen über ein Gestänge miteinander verbunden sind und gemeinsam öffnen und schließen und wobei auf die Regelklappen zumindest eine gemeinsame Schließfeder wirkt. Im Rahmen einer solchen Mehrklappenvorrichtung lässt sich folglich mit einer einzigen Schließfeder oder auch einem einzigen Schließfederpaar unter Berücksichtigung des erfindungsgemäßen Anschlusshebels eine einwandfreie Steuerung bzw. Regelung einer Mehrzahl von Regelklappen erreichen. Das Massenträgheitsmoment eines in diesem Falle vorgesehenen verbindenden Gestänges ist auf das Klappenmassenträgheitsmoment abgestimmt und bedämpft. Das Gehäuse einer solchen Mehrklappenvorrichtung weist zwischen den einzelnen Regelklappen vorzugsweise Trennwände unter Bildung separater Strömungsbereiche auf. Diese Trennwände gewährleisten, dass jede einzelne Klappe im Zuge des Öffnens auch tatsächlich lediglich von einer Seite umströmt wird und folglich keine undefinierten und unkontrollierten Strömungsverhältnisse durch Wechselwirkung zwischen den einzelnen Regelklappen entstehen.

Im Folgenden wird die Erfindung anhand einer lediglich ein Ausführungsbeispiel darstellenden Zeichnung näher erläutert. Es zeigen

Fig. 1        eine erfindungsgemäße Regelklappenvorrichtung als Mehrklappenvorrichtung in perspektivischer Ansicht,

Fig. 2        einen Ausschnitt aus dem Gegenstand nach Fig. 1,

Fig. 3        eine schematische Draufsicht auf den Gegenstand nach Fig. 2,

Fig. 4a - d   schematisch und ausschnittsweise den Gegenstand nach Fig. 3 in unterschiedlichen Funktionsstellungen,

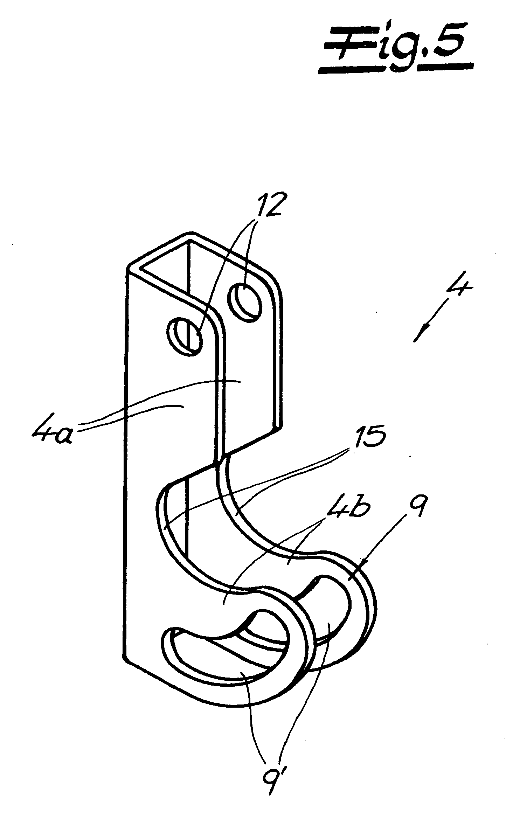

Fig. 5        den Anschlusshebel einer erfindungsgemäßen Regelklappenvorrichtung in perspektivischer Ansicht und

Fig. 6        den Verlauf der öffnenden Momente und des schließenden Moments in Abhängigkeit vom Regelklappenwinkel.

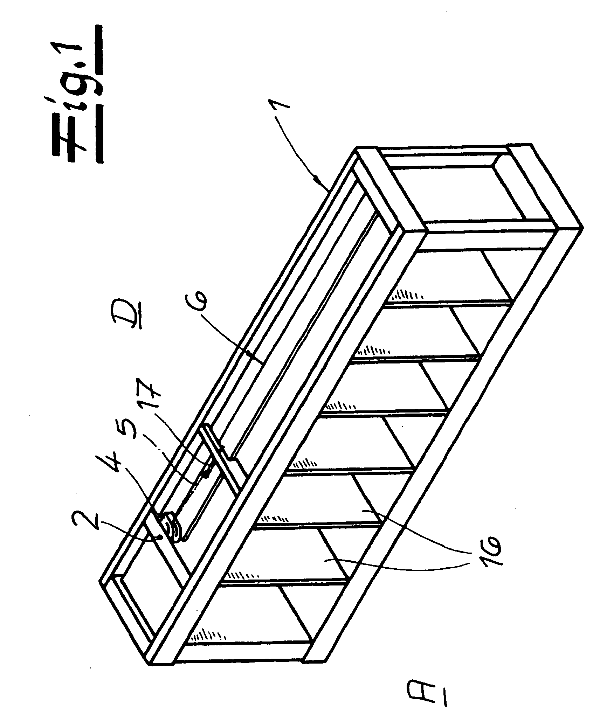

In den Figuren ist eine Regelklappenvorrichtung für eine Rauchschutz-Differenzdruckanlage mit einem Gehäuse 1, zumindest einer um eine Drehachse 2 schwenkbar in dem Gehäuse gelagerten Regelklappe 3 und zumindest einer einerseits an das Gehäuse 1 und andererseits über ein Anschlussteil an die Regelklappe 3 angeschlossenen Schließfeder 5 dargestellt. Gemäß Fig. 1 ist die Regelklappenvorrichtung im Ausführungsbeispiel als Mehrklappenvorrichtung mit einer Mehrzahl nebeneinander angeordneter Regelklappen 3, 3' ausgebildet, wobei die Regelklappen 3, 3' über ein Verbindungsgestänge 6 miteinander verbunden sind und gemeinsam öffnen und schließen, und wobei auf die mehreren Regelklappen 3, 3' eine einzige gemeinsame Schließfeder 5 unter Zwischenschaltung eines einzigen gemeinsamen Anschlussteils wirkt. Die Schließfeder 5 ist als Zugfeder und im Ausführungsbeispiel als zylindrische Schraubenfeder ausgebildet.

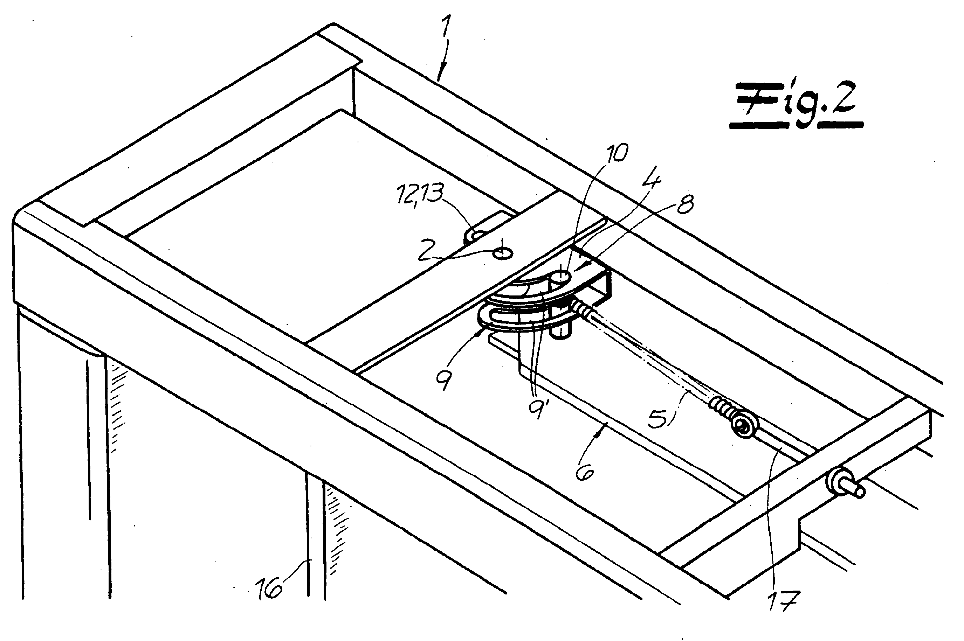

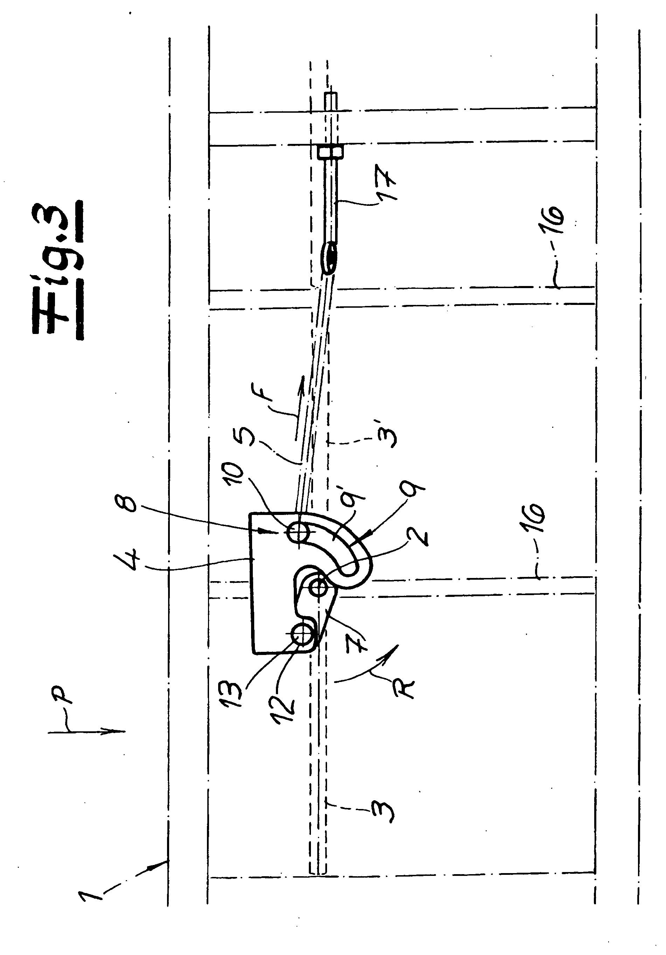

Die in Fig. 1 dargestellte Regelklappenvorrichtung trennt im Rahmen einer Rauchschutz-Differenzdruckanlage einen (hinteren) Druckraum D, in welchem ein Überdruck erzeugt und aufrechterhalten werden soll von einem (vorderen) Außenraum A, in dem beispielsweise Atmosphärendruck herrscht. Die Regelklappenvorrichtung kann an beliebigen Punkten zum Druckraum D in Verbindung zur Atmosphäre A montiert werden. Die Regelklappen sind in Fig. 1 und 2 nicht erkennbar. Sie sind gemäß Fig. 3 in dem dem Druckraum D zugewanden (hinteren) Bereich des Gehäuses 1 angeordnet. Fig. 3 zeigt dabei eine Regelklappe 3 in Schließstellung. Die Schließfeder 5 erzeugt mit ihrer Federkraft F ein die Regelklappe 3 in Schließstellung haltendes bzw. in Schließstellung überführendes Schließmoment $M_F$. Über einen nicht dargestellten Ventilator, welcher ebenfalls Bestandteil einer Differenzdruckanlage ist, wird in dem (hinteren) Druckraum D ein Überdruck aufgebaut, welcher den Druckraum von Rauch freihält. Die Regelklappe 3 schwenkt unter Bildung einer Durchströmöffnung um einen vorgegebenen Öffnungswinkel $\alpha$ in Öffnungsrichtung R, sobald ein einseitig auf die Regelklappe bzw. Regelklappen wirkender Öffnungsdruck bzw. Luftdruck P ein das Schließmoment übersteigendes Öffnungsmoment $M_L$ erzeugt. Im Ausführungsbeispiel ist das Schließmoment $M_F$ der Schließfeder 5 so eingestellt, dass das Öffnungsmoment $M_L$ jedenfalls bei einem Überdruck $\Delta P$ von 50,0 Pa das Schließmoment $M_F$ übersteigt, so dass die Regelklappe 3 öffnet und folglich der Überdruck um ein vorgegebenes Maß abgebaut werden kann. Sobald der Überdruck soweit abgesunken ist, dass das Schließmoment das Öffnungsmoment wieder übersteigt, schließt die Regelklappe 3 wieder selbsttätig. Die Öffnungsrichtung R ist in den Figuren angedeutet. Mit der Regelklappe 3 öffnen und schließen die übrigen Regelklappen 3' simultan.

Erfindungsgemäß ist das Anschlussteil, welches die Schließfeder 5 mit der Regelklappe 3 verbindet, als gelenkig an die Regelklappe 3 angeschlossener Anschlusshebel 4 ausgebildet. Folglich wird im Rahmen der Erfindung ein separates Anschlussgelenkbauteil zur Verfügung gestellt, welches einerseits gelenkig an die Schließfeder 5 und andererseits gelenkig an die Regelklappe 3 angeschlossen ist. Das als Anschlusshebel 4 ausgebildete Anschlussgelenkbauteil ist folglich sowohl schwenkbar gegenüber der Regelklappe als auch schwenkbar gegenüber der Schließfeder. Dabei zeigt Fig. 3, dass der Anschlusshebel 4 nicht unmittelbar an die Führungsklappe angeschlossen ist, sondern dass der Anschlusshebel 4 gelenkig an einen drehfesten mit der Regelklappe 3 verbundenen Verbindungsarm 7 angeschlossen ist. Dieser Verbindungsarm 7 ist unter einem festen Winkel an der Regelklappe 3 befestigt. Die Anordnung ist im Übrigen so getroffen, dass Schließfeder 5 einerseits und Regelklappe 3 (in Schließstellung) andererseits im Wesentlichen parallel zueinander angeordnet sind. Es besteht aber grundsätzlich auch die Möglichkeit, die Schließfeder in Schließstellung in anderem Winkel, zum Beispiel senkrecht bzw. in etwa senkrecht zur Regelklappe anzuordnen. Dann ist es lediglich erforderlich, den Verbindungsarm unter anderem Winkel an die Regelklappe anzuschließen. Stets ist der Verbindungsarm jedoch drehfest mit der Regelklappe verbunden. Jedenfalls weist der Anschlusshebel 4 zumindest eine Gelenkausnehmung 12 auf, in welcher ein Gelenkstift 13 drehbar gelagert ist. Der Gelenkstift 13 ist an die Regelklappe 3 oder den Verbindungsarm 7 angeschlossen.

Der Anschlusshebel 4 weist eine Führungskulisse 8 auf und ist folglich als Kurvenzug mit einer kurvenförmigen Langlochführung 9 ausgebildet, wobei in dieser Langlochführung 9 ein an die Schließfeder 5 endseitig angeschlossenes Führungselement in Form eines Führungszapfens 10 gelenkig und verschiebbar geführt ist. Der Führungszapfen 10 ist dabei wälzgelagert in der Langlochführung 9 geführt. Dieses gelingt zum Beispiel durch beidseitig auf den Führungszapfen 10 aufgesetzte (Schulter-) Kugellager, welche in die beiden Langlöcher 9' eingreifen. Im Übrigen ist in den Figuren erkennbar, dass der Anschlusshebel 4 in der Seitenansicht L-förmig und im Querschnitt U-förmig ausgebildet ist. In der Seitenansicht ist in dem einem L-Schenkel 4a eine Gelenkausnehmung 12 zur gelenkigen Anlenkung des Verbindungsarms 7 und in dem anderen L-Schenkel 4b die Langlochführung 9 mit den beiden Langlöchern 9' angeordnet. Durch die Ausbildung des Anschlusshebels 4 als U-Profil ist es zweckmäßig, wenn in den beiden U-Schenkeln jeweils eine Gelenkausnehmung 12 und ein Langloch 9' vorgesehen sind, wobei diese selbstverständlich fluchten.

Erfindungsgemäß ist die Schließfeder 5 über den Anschlusshebel 4 derart an die Schließklappe 3 angeschlossen, dass der auf die Klappe 3 wirkenden Hebelarm a in allen Klappenstellungen größer Null ist, so dass die Federkraft in allen Klappenstellungen ein Schließmoment größer Null erzeugt. Hebelarm a bzw. Länge des Hebelarms meint im Rahmen der Erfindung den senkrechten Abstand der Federkraftwirkungslinie 14 bzw. des Federkraftvektors von dem Drehpunkt bzw. der Drehachse 2.

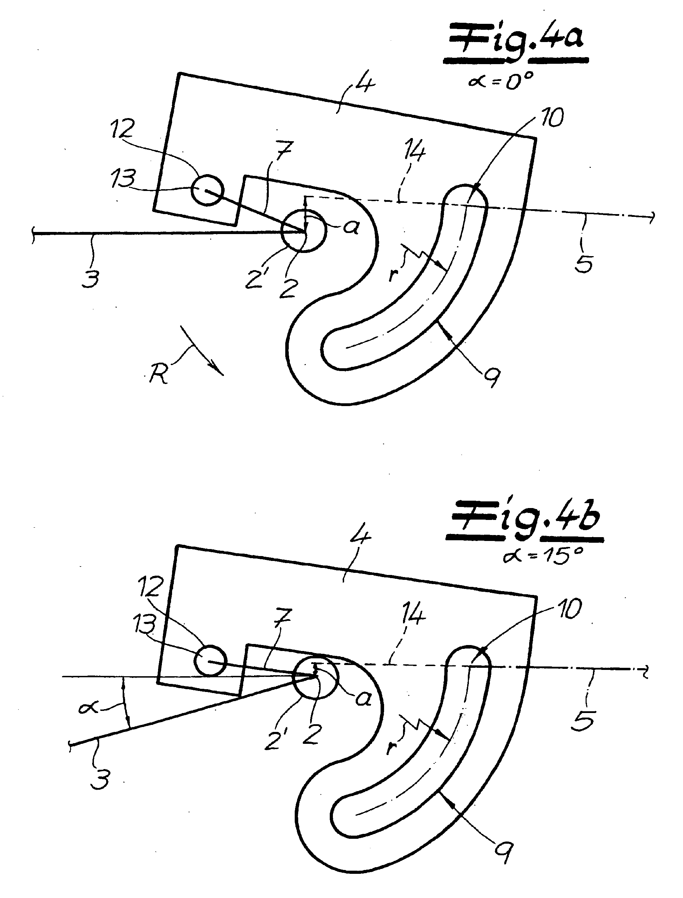

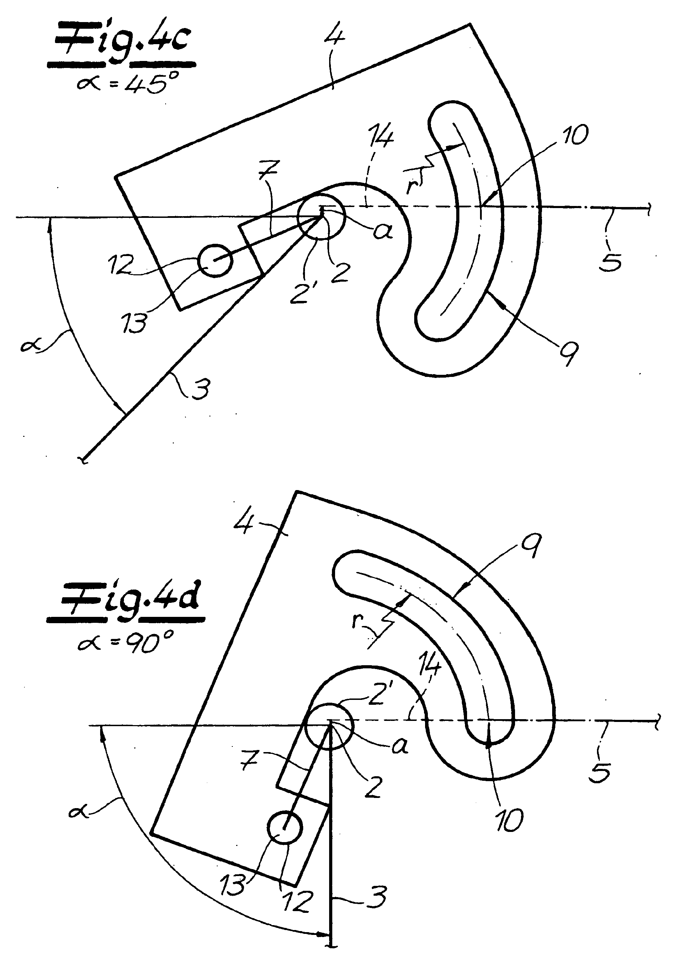

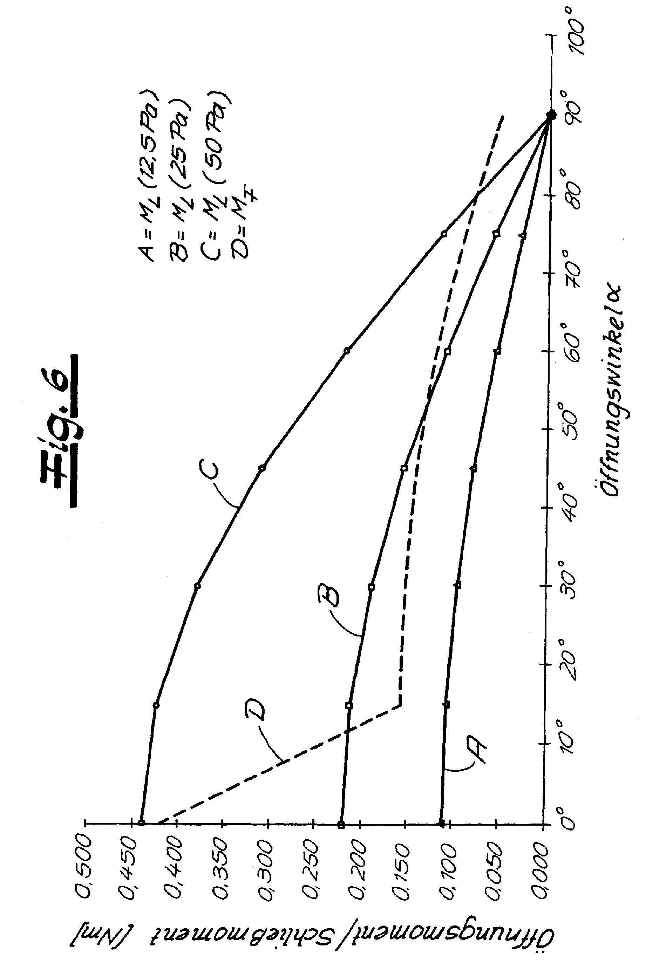

Die Funktionsweise der erfindungsgemäßen Regelklappenvorrichtung wird im Folgenden anhand der Fig. 4a bis 4d unter gleichzeitiger Berücksichtigung der Momentenverläufe gemäß Fig. 6 erläutert. Fig. 4a bis 4d zeigen schematisch den Anschlusshebel 4 in unterschiedlichen Funktionsstellungen bei einem Öffnungswinkel von $\alpha = 0°$, $\alpha = 15°$, $\alpha = 45°$ sowie $\alpha = 90°$. Die Federkraftwirkungslinie 14 sowie die Regelklappe 3 und der daran angeschlossene Verbindungsarm 7 sind lediglich angedeutet. Ferner ist jeweils der Hebelarm a eingezeichnet.

Gemäß Fig. 4a ist der Anschlusshebel 4 in Schließstellung ($\alpha = 0°$) der Regelklappe 3 zunächst von der Drehachse 2 bzw. Drehwelle 2' beabstandet und folglich berührungsfrei angeordnet. Im Zuge des Öffnens der Regelklappe 3 bei einem vorgegebenen Öffnungsdruck schwenkt die Regelklappe um die Drehachse 2. Durch die gelenkige Anbindung des Anschlusshebels 4 an einerseits die Schließfeder 5 und andererseits die Regelklappe 3 zieht die Regelklappe 3 den Anschlusshebel 4 zunächst in Richtung der Drehachse 2, so dass der Anschlusshebel 4 bei einem vorgegebenen Grenzwinkel gegen die Drehwelle 2' zur Anlage kommt (vgl. Fig. 4b). Der Hebelarm a nimmt stark ab. Sofern die Regelklappe 3 anschließend über diesen Grenzwinkel hinaus weiter geöffnet wird, bleibt der Anschlusshebel 4 in Anlage mit der Drehwelle 2', so dass der Anschlusshebel 4 reibungsfrei mit der Drehwelle 2' rotiert. Der gemäß Fig. 4a bei $\alpha = 0°$ in der oberen Endstellung angeordnete Führungszapfen 10 wandert in der Langlochführung 9 bis er bei vollständig geöffneter Regelklappe 3 in die gegenüberliegende untere Endstellung gelangt. Eine vergleichende Betrachtung der Fig. 4a bis 4d zeigt, dass selbst bei hohen Öffnungswinkeln stets ein definierter Resthebelarm a verbleibt.

Dieses spiegelt sich in den Momentenverläufen gemäß Fig. 6 wieder. In Fig. 6 sind zunächst einmal als Kurven A, B, C die vom Klappenwinkel $\alpha$ abhängigen Öffnungsmomente $M_L$ für einen Überdruck $\Delta P$ von 12,5 Pa, 25 Pa sowie 50 Pa dargestellt. Ferner ist als Kurve D das von der Schließfeder 5 erzeugte Schließmoment $M_F$ ebenfalls in Abhängigkeit vom Klappenwinkel $\alpha$ aufgezeichnet. Es ist zunächst einmal erkennbar, dass das von der Schließfeder 5 erzeugte Schließmoment $M_F$ von der Schließstellung ($\alpha = 0°$) bis in die vollständige Offenstellung ($\alpha = 90°$) kontinuierlich abnimmt und stets größer Null ist. Durch die bereits erläuterte Resthebelarmlänge a größer Null bei sämtlichen Öffnungswinkeln $\alpha$ wird folglich gewährleistet, dass bei im Wesentlichen konstanter Federkraft stets ein ausreichendes Schließmoment und folglich Rückholmoment verbleibt. Dieses gelingt im Wesentlichen durch die gelenkige Anbindung der Regelklappe 3 unter Zwischenschaltung des gleichsam freibeweglichen als Anschlusshebel 4 ausgebildeten Anschlussgelenkes an die Schließfeder 5. So zeigt Fig. 6, dass das Schließmoment $M_F$ in einem ersten Winkelbereich von einem Klappenwinkel von 0° bis zu einem Klappenwinkel von etwa 15° mit hoher Steigung stark abfällt und dann in einem zweiten Winkelbereich bis zum vollständig geöffneten Klappenwinkel von 90° lediglich mit geringer Steigung schwach abnimmt. Der Abfall in dem zweiten Abschnitt ist folglich (deutlich) geringer als in dem ersten Abschnitt. Es werden im Übrigen auch Ausführungsformen umfasst, bei denen das Schließmoment in dem zweiten Abschnitt zumindest bereichsweise konstant ist. Stets soll jedoch gewährleistet sein, dass das Schließmoment bei steigendem Öffnungswinkel nicht wieder zunimmt. Dabei macht Fig. 6 deutlich, dass das Schließmoment $M_F$ stets exakt zwei definierte Schnittpunkte mit dem Öffnungsmoment $M_L$ bei 25,0 Pa aufweist. Dabei schneidet das Schließmoment (Kurve D) sowohl die Kurve B als auch die Kurve C bei hohen Klappenöffnungswinkeln definiert und exakt einmal. Ausgehend von der vollständigen Offenstellung bei 90° wächst das Schließmoment $M_F$ stets kontinuierlich an, so dass eine einwandfreie Klappenrückführung gewährleistet ist.

Das mechanische Klappenrückführsystem bzw. die Schließfeder kann folglich mit im Wesentlichen konstanter Federvorspannung ausgelegt werden, welches die zusätzlichen Reibungseffekte durch zunehmende Federkräfte vermeidet und dadurch eine sichere Klappenrückführung ermöglicht.

Im Ausführungsbeispiel ist zwischen Langlochführung 9 und Gelenkausnehmung 12 eine Führungsfläche 15 angeordnet, die kurvenförmig als gleichsam Einformung ausgebildet ist und an der das Gelenk (Anschlusshebel 4) im Zuge des Öffnens an der Drehwelle 2' geführt ist. Insofern ist erkennbar, dass sich der L-förmige gelenkige Anschlusshebel 4 gleichsam um die Achse 2 konzentriert, so dass die beschriebenen geringen Massenträgheitsmomente auftreten.

Im Übrigen zeigt Fig. 1, dass das Gehäuse 1 bei der Ausführungsform als Mehrklappenvorrichtung zwischen den einzelnen nebeneinander angeordneten Regelklappen 3, 3' jeweils eine Trennwand 16 unter Bildung separater Strömungsbereiche aufweist.

Die Langlochführung 9 erstreckt sich in etwa kreisbogenförmig über eine Bogenlänge von $\frac{\pi}{4} \cdot r$ bis

$\frac{\pi}{2} \cdot r$, wobei r der mittlere Radius ist. Die vorgespannte Schließfeder 5 ist schwenkbar an das Gehäuse 1 angelenkt und zwar an einen an dem Gehäuse 1 befestigten Federhalter 17, welcher verstellbar bzw. justierbar an dem Gehäuse 1 befestigt ist.

## Patentansprüche

1. Regelklappenvorrichtung, insbesondere für eine Rauchschutz-Differenzdruckanlage, mit
einem Gehäuse (1),
zumindest einer um eine Drehachse (2) schwenkbar in dem Gehäuse (1) gelagerten Regelklappe (3),
und zumindest einer einerseits an das Gehäuse (1) und andererseits über zumindest ein Anschlussteil an die Regelklappe (3) angeschlossenen Schließfeder (5),
wobei die Schließfeder (5) mit ihrer Federkraft (F) ein die Regelklappe (3) in Schließstellung haltendes oder in Schließstellung überführendes Schließmoment ($M_F$) erzeugt,
wobei die Regelklappe (3) unter Bildung einer Durchströmöffnung um einen vorgegebenen Öffnungswinkel ($\alpha$) schwenkt, sobald ein einseitig auf die Regelklappe (3) wirkender Öffnungsdruck (P) ein das Schließmoment ($M_F$) übersteigendes Öffnungsmoment ($M_L$) erzeugt,
wobei das Anschlussteil als gelenkig an die Regelklappe angeschlossener Anschlusshebel (4) ausgebildet ist, **dadurch gekennzeichnet, dass** der Anschlusshebel (4) eine Führungskulisse (8) mit einer vorzugsweise kurvenförmigen Langlochführung (9) aufweist, in der ein an die Schließfeder (5) endseitig angeschlossenes Führungselement, zum Beispiel ein Führungszapfen (10), gelenkig verschiebbar geführt ist.

2. Vorrichtung nach Anspruch 1, **dadurch gekennzeichnet, dass** der Anschlusshebel (4) gelenkig an einen drehfest mit der Regelklappe (3) verbundenen Verbindungsarm (7) oder Verbindungsansatz angeschlossen ist.

3. Vorrichtung nach Anspruch 1 oder 2, **dadurch gekennzeichnet, dass** der Führungszapfen (10) wälzgelagert in der Langlochführung (9) geführt ist.

4. Vorrichtung nach einem der Ansprüche 1 bis 3, **dadurch gekennzeichnet, dass** die Schließfeder (5) über den Anschlusshebel (4) derart an die Schließklappe (3) angeschlossen ist, dass der auf die Klappe (3) wirkende Hebelarm (a) in allen Klappenstellungen größer als Null ist, sodass die Federkraft (F) in allen Klappenstellungen ein Schließmoment $M_F$ größer Null erzeugt.

5. Vorrichtung nach einem der Ansprüche 1 bis 4, **dadurch gekennzeichnet, dass** der Anschlusshebel (4) in Schließstellung von der Drehachse (2) oder Drehwelle (2') beabstandet ist und im Zuge des Öffnens der Regelklappe (3) ab einem vorgegebenen Grenzwinkel gegen die Drehachse (2) bzw. die Drehwelle (2') anliegt.

6. Vorrichtung nach Anspruch 5, **dadurch gekennzeichnet, dass** das von der Schließfeder (5) erzeugte und von dem Öffnungswinkel ($\alpha$) abhängige Schließmoment ($M_F$) von der Schließstellung bis in die vollständige Offenstellung kontinuierlich abnimmt.

7. Vorrichtung nach Anspruch 6, **dadurch gekennzeichnet, dass** das Schließmoment ($M_F$) in Abhängigkeit vom Öffnungswinkel ($\alpha$) von der Schließstellung im Zuge des Öffnens bis zu einem Grenzwinkel stark abnimmt und anschließend bei weiter steigendem Öffnungswinkel lediglich schwach abnimmt.

8. Vorrichtung nach einem der Ansprüche 1 bis 7, **dadurch gekennzeichnet, dass** der Anschlusshebel (4) in der Seitenansicht L-förmig oder C-förmig ausgebildet ist.

**9.** Vorrichtung nach einem der Ansprüche 1 bis 8, **dadurch gekennzeichnet, dass** der Anschlusshebel (4) im Querschnitt U-förmig ausgebildet ist.

**10.** Vorrichtung nach Anspruch 8 oder 9, **dadurch gekennzeichnet, dass** in dem einen L-Schenkel (4a) zumindest eine Gelenkaufnahme (12) zur gelenkigen Anlenkung der Regelklappe (3) oder des Verbindungsarms (7) und in dem anderen L-Schenkel (4b) die Langlochführung (9) angeordnet ist.

**11.** Vorrichtung nach einem der Ansprüche 8 bis 10, **dadurch gekennzeichnet, dass** zwischen Langlochführung (9) und Gelenkausnehmung (12) eine Führungsfläche (15) angeordnet ist, mit welcher der Anschlusshebel (4) im Zuge des Öffnens an der Drehachse (2) oder Drehwelle (2') geführt ist.

**12.** Vorrichtung nach einem der Ansprüche 1 bis 11, **dadurch gekennzeichnet, dass** der Anschlusshebel (4) aus Metall, zum Beispiel aus Stahl, gefertigt ist.

**13.** Regelklappenvorrichtung nach einem der Ansprüche 1 bis 12 in der Ausführungsform als Mehrklappenvorrichtung, mit einer Mehrzahl nebeneinander und/oder übereinander bzw. untereinander in einem gemeinsamen Gehäuse (1) angeordneter Regelklappen (3, 3'), wobei die Regelklappen (3, 3') über ein Gestänge (6) miteinander verbunden sind und gemeinsam öffnen und schließen und wobei auf die Regelklappen (3, 3') zumindest eine gemeinsame Schließfeder (5) wirkt.

**14.** Vorrichtung nach Anspruch 13, **dadurch gekennzeichnet, dass** das Gehäuse (1) zwischen den einzelnen Regelklappen (3, 3') Trennwände (16) unter Bildung separater Strömungsbereiche aufweist.

**Claims**

**1.** A control damper device, in particular for a smoke protection differential pressure system, with
a housing (1),
at least one control damper (3) swivel-mounted around a rotational axis (2) in the housing (1),
and at least one closing spring (5) connected on the one hand to the housing (1) and on the other hand by at least one connection part to the control damper (3),
wherein the closing spring (5) generates with its spring force (F) a closing moment ($M_F$) which holds the control damper (3) in a closed position or transfers it into a closed position,
wherein the control damper (3) swivels through a preselected opening angle ($\alpha$) thereby forming a through-flow opening, as soon as an opening pressure (P) acting on one side on the control damper (3) generates an opening moment ($M_L$) which exceeds the closing moment ($M_F$),
wherein the connection part is constituted as a connection lever (4) connected in an articulated manner to the control damper, **characterised in that** the connection lever (4) comprises a guide link (8) with a preferably curved slotted hole guide (9), in which a guide element, for example a guide pin (10), connected at the end to the closing spring (5) is guided displaceably in an articulated manner.

**2.** The device according to claim 1, **characterised in that** the connection lever (4) is connected in an articulated manner to a connection arm (7) or connection extension connected non-rotatably to the control damper (3).

**3.** The device according to claim 1 or 2, **characterised in that** the guide pin (10) is mounted roller-beared in the slotted hole guide (9).

**4.** The device according to any one of claims 1 to 3, **characterised in that** the closing spring (5) is connected via the connection lever (4) to the control damper (3) in such a way that the lever arm (a) acting on the damper (3) is greater than zero in all damper positions, so that the spring force (F) generates a closing moment ($M_F$) greater than zero in all damper positions.

**5.** The device according to any one of claims 1 to 4, **characterised in that** the connection lever (4) in the closed position is spaced apart from the rotational axis (2) or rotary shaft (2') and, during the opening of the control damper (3), lies against the rotational axis (2) or the rotary shaft (2') from a predetermined limiting angle.

**6.** The device according to claim 5, **characterised in that** the closing moment ($M_F$) generated by the closing spring (5) and dependent on the opening angle ($\alpha$) continuously diminishes from the closed position up to the fully opened position.

**7.** The device according to claim 6, **characterised in that** the closing moment ($M_F$) sharply diminishes as a function of the opening angle ($\alpha$) from the closed position during the opening up to a limiting angle and then diminishes only slightly with a further increasing opening angle.

**8.** The device according to any one of claims 1 to 7, **characterised in that** the connection lever (4) is constituted L-shaped or C-shaped in side view.

**9.** The device according to any one of claims 1 to 8, **characterised in that** the connection lever (4) is constituted U-shaped in longitudinal cross-section.

**10.** The device according to claim 8 or 9, **characterised in that** at least one link cutout (12) for the articulated linking of the control damper (3) or the connection arm (7) is disposed in the one L-leg (4a) and the slotted hole guide (9) is disposed in the other L-leg (4b).

**11.** The device according to any one of claims 8 to 10, **characterised in that** there is disposed between the slotted hole guide (9) and the link cutout (12) a guide surface (15), with which the connection lever (4) is guided on the rotational axis (2) or the rotary shaft (2') during the opening.

**12.** The device according to any one of claims 1 to 11, **characterised in that** the connection lever (4) is produced from metal, for example from steel.

**13.** A control damper device according to any one of claims 1 to 12 in the embodiment as a multiple damper device, with a plurality of control dampers (3, 3') disposed beside one another and/or above and below one another in a common housing (1), wherein the control dampers (3, 3') are connected to one another by a linkage (6) and jointly open and close and wherein at least one common closing spring (5) acts on the control dampers (3, 3').

**14.** The device according to claim 13, **characterised in that** the housing (1) comprises partition walls (16) between the individual control dampers (3, 3') thereby forming separate flow regions.

**Revendications**

**1.** Dispositif de volets de réglage, en particulier pour une installation à pression différentielle pour la protection contre les fumées, comprenant
un boîtier (1),
au moins un volet de réglage (3) disposé pivotant sur un axe de rotation (2) dans le boîtier (1),
et au moins un ressort de fermeture (5) raccordé d'une part au boîtier (1) et d'autre part au volet de réglage (3) par au moins une pièce de raccordement, sachant que le ressort de fermeture (5) produit avec sa force de rappel (F), un couple de fermeture ($M_F$) maintenant ou faisant passer le volet de réglage (3) en position de fermeture,
sachant que le volet de réglage (3) pivote sur un angle d'ouverture ($\alpha$) prédéfini en formant une ouverture de débit, dès qu'une pression d'ouverture (P) agissant sur un côté du volet de réglage (3) produit un couple d'ouverture ($M_L$) dépassant le couple de fermeture ($M_F$),
sachant que la pièce de raccordement est formée en tant que levier de raccordement (4) raccordé de façon articulée sur le volet de réglage, **caractérisé en ce que** le levier de raccordement (4) présente une coulisse de guidage (8) avec un guide oblong (9) de préférence incurvé dans lequel un élément de guidage raccordé à l'extrémité au ressort de fermeture (5), par exemple un ergot de guidage (10), est guidé en pivotant de façon articulée.

**2.** Dispositif selon la revendication 1, **caractérisé en ce que** le levier de raccordement (4) est raccordé de façon articulée à un bras de liaison (7) ou une saillie de liaison relié(e) fixe en rotation avec le volet de réglage (3).

**3.** Dispositif selon la revendication 1 ou 2, **caractérisé en ce que** l'ergot de guidage (10) est dirigé en étant monté sur des roulements dans le guide oblong (9).

**4.** Dispositif selon l'une des revendications 1 à 3, **caractérisé en ce que** le ressort de fermeture (5) est raccordé au volet de fermeture (3) par le levier de raccordement (4) de telle façon que le bras de levier (a) agissant sur le volet (3) est supérieur à zéro dans toutes les positions de volet, de telle sorte que la force de rappel (F) produit un couple de fermeture ($M_F$) supérieur à zéro dans toutes les positions de volet.

**5.** Dispositif selon l'une des revendications 1 à 4, **caractérisé en ce que** le levier de raccordement (4) est distant de l'axe de rotation (2) ou de l'arbre rotatif (2') en position de fermeture et repose contre l'axe de rotation (2) respectivement l'arbre rotatif (2') suite à l'ouverture du volet de réglage (3) depuis un angle limite prédéfini.

**6.** Dispositif selon la revendication 5, **caractérisé en ce que** le couple de fermeture ($M_F$) produit par le ressort de fermeture (5) et fonction de l'angle d'ouverture ($\alpha$) décroît continuellement de la position de fermeture à la position d'ouverture complète.

**7.** Dispositif selon la revendication 6, **caractérisé en ce que** le couple de fermeture ($M_F$) décroît fortement jusqu'à un angle limite en fonction de l'angle d'ouverture ($\alpha$) de la position de fermeture suite à l'ouverture et décroît enfin seulement faiblement à mesure que l'angle d'ouverture continue de croître.

**8.** Dispositif selon l'une des revendications 1 à 7, **caractérisé en ce que** le levier de raccordement (4) est formé en L ou en C en vue latérale.

**9.** Dispositif selon l'une des revendications 1 à 8, **caractérisé en ce que** le levier de raccordement (4) est formé en U en section transversale.

**10.** Dispositif selon la revendication 8 ou 9, **caractérisé en ce que** dans l'une branche en L (4a), est disposé au moins une réception articulée (12) pour l'appui articulé du volet de réglage (3) ou du bras de liaison (7), et le guide oblong (9) est disposé dans l'autre branche en L (4b).

11. Dispositif selon l'une des revendications 8 à 10, **caractérisé en ce qu'**une surface de guidage (15) est disposée entre le guide oblong (9) et l'évidement articulé (12), avec laquelle le levier de raccordement (4) est dirigé sur l'axe de rotation (2) ou l'arbre rotatif (2') suite à l'ouverture.

12. Dispositif selon l'une des revendications 1 à 11, **caractérisé en ce que** le levier de raccordement (4) est fabriqué en métal, par exemple en acier.

13. Dispositif de volets de réglage selon l'une des revendications 1 à 12 conçu en tant que dispositif à volets multiples, comprenant une pluralité de volets de réglage (3, 3') disposés l'un à côté de l'autre et/ou l'un sur l'autre, respectivement l'un en-dessous de l'autre dans un boîtier commun (1), dans lequel les volets de réglage (3, 3') sont reliés entre eux par une tringle (6) et s'ouvrent et se ferment conjointement, et dans lequel au moins un ressort de fermeture (5) commun agit sur les volets de réglage (3, 3').

14. Dispositif selon la revendication 13, **caractérisé en ce que** le boîtier (1) présente des parois de séparation (16) entre les différents volets de réglage (3, 3') en formant des zones de débit séparées.

Fig. 1

EP 1 701 108 B1

Fig.2

_Fig.3_

*Fig.4a*
α = 0°

*Fig.4b*
α = 15°

**Fig.4c**
α = 45°

4

14

7

10

r

12

α

2'  2

13

3

9

5

**Fig.4d**
α = 90°

4

9

r

14

2'

7

a

2

α

13

10

12

3

5

_Fig.5_

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251149 A1
- DE 1454651 A1